# EUROPÄISCHE PATENTSCHRIFT

(11) **EP 2 935 916 B1**
(45) Veröffentlichungstag und Bekanntmachung des Hinweises auf die Patenterteilung: **28.09.2016**
(21) Anmeldenummer: 13814046.2
(22) Anmeldetag: 18.11.2013
(51) Int. Cl.: F16F 1/38, B60G 7/00, B60G 7/04, F16C 11/10

(54) **GELENKEINRICHTUNG FÜR EIN KRAFTFAHRZEUG**
JOINT DEVICE FOR A MOTOR VEHICLE
SYSTÈME ARTICULÉ POUR VÉHICULE AUTOMOBILE

(30) Priorität: 19.12.2012 DE 102012223829
(43) Veröffentlichungstag der Anmeldung: 28.10.2015
(73) Patentinhaber: ZF Friedrichshafen AG, 88046 Friedrichshafen (DE)
(72) Erfinder: JUNG, Frank, 27232 Sulingen (DE); HARDT, Holger, 49744 Geeste (DE)
(86) Internationale Anmeldenummer: PCT/EP2013/074006
(87) Internationale Veröffentlichungsnummer: WO 2014/095190

(56) Entgegenhaltungen:
- EP-A1- 0 007 430
- DE-A1-102006 013 048
- DE-A1-102006 061 974
- DE-U1-202004 019 733
- FR-A5- 2 126 016
- FR-A5- 2 159 152
- US-A- 3 482 465

## Beschreibung

Die Erfindung betrifft eine Gelenkeinrichtung, umfassend einen axial erstreckten Gelenkzapfen, insbesondere eine sog. Pratze, und eine diesen ganz oder teilweise radial umgebende elastisch verformbare Lage, die an ihrer radialen Außenseite zumindest bereichsweise in Kontakt zu einem äußeren Gehäuse steht und die an zumindest einem axialen Ende mit einem Ringkörper verbunden ist, insbesondere an diesen anvulkanisiert ist, wobei der Gelenkzapfen mit der elastisch verformbaren Lage und dem zumindest einen Ringkörper einen relativ zum Gehäuse beweglichen Gelenkkörper bildet, nach dem Oberbegriff des Anspruchs 1.

Gelenkeinrichtungen dieser Art werden häufig auch als Molekulargelenke bezeichnet. Dabei ist der Gelenkzapfen beispielsweise kugelförmig erweitert.

Um einen hohen Komfort zu gewährleisten, ist es bekannt, die Innenwandung des Gehäuses nicht rundzylindrisch durchlaufen zu lassen, sondern sie mit einer Freidrehung zu versehen, beispielsweise mit einem Radius von 100 Millimetern, so dass sich eine konkav ausgewölbte Innenwandung ergibt, in die bei der Montage unter axialer Vorspannung sich die elastisch verformbare Lage eindrücken kann. Damit ergibt sich bei geringen Lasten eine höhere Einfederung der Gelenkeinrichtung, so dass gute Komfort- und Akustikeigenschaften erzielt werden. Mit der durch die genannte Komfortauslegung bedingten geringen Vorspannung der Gelenkeinrichtung kann jedoch bei Torsion ein frühzeitiges Durchrutschen der verformbaren Lage oder einer damit verbundenen Schale gegenüber dem Gehäuse auftreten. Insbesondere ein Durchrutschen einer Schale gegenüber einem den Gelenkkörper verspannenden Verschlussring ist dabei mit großer Geräuschentwicklung nach Art eines Knarzens verbunden. Auch kann es bei der Relativbewegung zwischen der Elastomerlage und der Gehäusewand im Betrieb zu einem erhöhten Verschleiß mit Reduzierung der Gelenkvorspannung kommen.

Die EP 0 007 430 A1 offenbart ein elastisches Kugelgelenk mit einem gegenüber einem metallischen Gehäuse kardanisch und drehbar beweglichen Kugelzapfen, das in einem Vorzustand als Gummi-Metall-Teil mit einem ringförmigen Gummikörper ausgebildet ist, der innenseits mit einem den Kugelzapfen bildenden Innenteil und außenseits mit einem zylindrischen Mittelabschnitt eines beiderseits des Mittelabschnitts freie Rohrenden aufweisenden Gehäuses haftend verbunden ist, wobei im Fertigzustand das Gehäuse auf einen kleineren Rohrdurchmesser reduziert ist und die Rohrenden nach innen umgebördelt sind. Der Gummikörper weist im Vorzustand des Gummi-Metall-Teils beiderseits des Mittelabschnitts radial zurückstehende Bereiche mit freier Oberfläche auf, wobei anschließend an diese Bereiche von den Rohrenden überragte, kugelzonenartige, metallische Endstücke von kleinerem Außendurchmesser als dem lichten Durchmesser der Rohrenden mit dem Gummikörper haftend verbunden sind. Im Fertigzustand verbinden die umgebördelten Rohrenden die Endstücke drehfest mit dem Gehäuse, wobei das Gehäuse zusammen mit den Rohrenden soweit auf einen kleineren Durchmesser reduziert ist, dass die Rohrenden hinsichtlich des Innendurchmessers dem Außendurchmesser der Endstücke entsprechen. Die Endstücke sind an ihrem Außendurchmesser mit Ausnehmungen versehen, in die im Fertigzustand die umgebördelten Rohrenden partiell eingreifen.

Der Erfindung liegt das Problem zugrunde, insbesondere für derartige Komfortgelenke, aber auch für andere Gelenke mit einer elastisch verformbaren Lage eine Verbesserung zu erreichen.

Die Erfindung löst dieses Problem durch eine Gelenkeinrichtung mit den Merkmalen des Anspruchs 1 sowie durch ein Kraftfahrzeug mit den Merkmalen des Anspruchs 16. Zu vorteilhaften Ausgestaltungen und Weiterbildungen der Erfindung wird auf die weiteren Ansprüche 2 bis 15 verwiesen.

Mit der Erfindung ist in Ausbildung nach Anspruch 1 dadurch, dass eine Verdrehbarkeit des Gelenkkörpers um seine Längsachse über eine zusätzlich zur Anlage der Außenseite der elastisch verformbaren Lage an dem Gehäuse vorgesehene Verdrehsicherung gehemmt ist, sichergestellt, dass auch bei einer relativ geringen axialen Vorspannung immer noch eine hohe Ausfallsicherheit und ein hoher Komfort des Gelenks auch im Torsionsfall vorliegen.

Sofern die Verdrehsicherung kraftschlüssig zwischen dem Gelenkkörper und dem Gehäuse wirksam ist, kann oberhalb einer Grenzbelastung im Drehsinn eine Relativbewegung zwischen dem Gelenkkörper und dem Gehäuse möglich sein. Insbesondere bei kleineren Drehwinkeln kann jedoch ein Verdrehen zwischen Gelenkkörper und Gehäuse vollständig ausgeschlossen sein. Eine kraftschlüssige Abstützung der Teile aneinander garantiert zudem eine Klapperfreiheit auch unter Last.

Wenn die Verdrehsicherung formschlüssig zwischen dem Gelenkkörper und dem Gehäuse wirksam ist, kann auch bei größeren Drehwinkeln vermieden werden, dass es zu einer Drehbewegung zwischen dem Gelenkkörper und dem Gehäuse kommt.

Die Verdrehsicherung kann durch an der radialen Außenseite des Gelenkkörpers und/oder an der radialen Innenseite des Gehäuses angeordnete Maßnahmen gebildet sein. Je nach Geometrie und Größe der jeweiligen Gelenkeinrichtung ergeben sich somit unterschiedliche Möglichkeiten der Verwirklichung.

Günstig ist zur Ausbildung einer Verdrehsicherung zumindest eine mit der elastischen Lage verbundene Schale per Presspassung im Gehäuse gehalten, so dass die Schale dann kein Spiel mehr in ihrer Einbaulage hat und sich nur unter sehr hohem Kraftaufwand gegenüber dem Gehäuse verdrehen kann.

Dabei kann zur Unterstützung der Presspassung an zumindest einer mit der elastischen Lage verbundenen Schale eine nach radial außen weisende Zahnprofilierung nach Art einer Rändelung angeordnet sein. Je nach Ausbildung kann dadurch zum Beispiel ein Durchrutschen bis zu einem sehr großen Grenzwinkel von 45°unterbunden sein. Übliche Anforderungen eines solchen Grenzwinkels liegen zumeist im Bereich von nur etwa 10° bis 20°.

Dabei ist vorteilhaft die Schale über die Zahnprofilierung kraftschlüssig an dem Gehäuse abgestützt. Die Zahnprofilierung kann dabei aus einem gegenüber dem Gehäuse höherfesten Material gefertigt sein, so dass sich auch im Dauerbetrieb die Zähne nicht abnutzen.

Zusätzlich oder alternativ zum Kraftschluss kann die Zahnprofilierung formschlüssig in die radial nach innen weisende Wandung des Gehäuses eingreifen. Insbesondere ist es auch möglich, dass zunächst ein reiner Kraftschluss vorliegt, der nach einiger Betriebsdauer durch eine formschlüssige Verbindung ergänzt wird.

Anstelle einer Zahnprofilierung auf der radialen Außenseite kann auch auf der nach radial innen weisende Seite des Gehäuses eine Zahnprofilierung angeordnet sein.

Des Weiteren ist es auch möglich, dass zumindest ein Teil der radial nach außen weisenden Fläche der elastischen Lage als Verdrehsicherung mit dem Gehäuse verklebt ist. Hier besteht eine große Kontaktfläche, so dass eine flächenmäßige Verklebung punktuell nur wenig Kraft abzufangen hätte.

Insbesondere, wenn auch nicht zwingend, bildet eine erfindungsgemäße Gelenkanordnung ein oben beschriebenes Komfortgelenk aus. Dabei ist der Gelenkkörper in Einbaulage axial vorgespannt und durch die axiale Vorspannung die elastische Lage in Einbaustellung in eine radiale Freidrehung des Gehäuses eingedrückt. Dabei ist durch die Freidrehung eine konkave Wandungslinie der radial nach innen weisenden Wandung des Gehäuses gebildet, so dass dort ein Anlageraum für die elastisch verformbare Lage gebildet ist.

Alternativ können der Gelenkkörper und der Aufnahmeraum des Gehäuses eine von der Rotationssymmetrie abweichende Umrissgestalt, insbesondere eine ovale Umrissgestalt, als Verdrehsicherung ausbilden. Dann ist eine Verdrehung der Teile gegeneinander um die Zapfenachse auch oberhalb eines Grenzwinkels verhindert.

Eine weitere zusätzliche oder alternative Möglichkeit einer Verdrehsicherung besteht darin, als Verdrehsicherung mit einer axialen Komponente in einen Verschlussring und eine Schale des Gelenkkörpers eingreifende Blockiermittel, insbesondere Stifte, vorzusehen. Diese würden dann ebenfalls bei jedem beliebigen Winkel eine Blockierung der Drehbewegung bewirken können.

Ein Kraftfahrzeug mit zumindest einer Gelenkeinrichtung nach einem der Ansprüche 1 bis 15 ist gesondert beansprucht.

Insbesondere kann ein solches Kraftfahrzeug ein Nutzkraftwagen (NKW) sein, wobei eine solche Gelenkeinrichtung zur Verbindung von Fahrwerksteilen mit einem Fahrzeugrahmen dienen kann.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine perspektivische Darstellung einer möglichen Gelenkeinrichtung mit einer radial nach außen weisenden Rändelung an einer mit der elastisch verformbaren Lage verbundenen Schale,

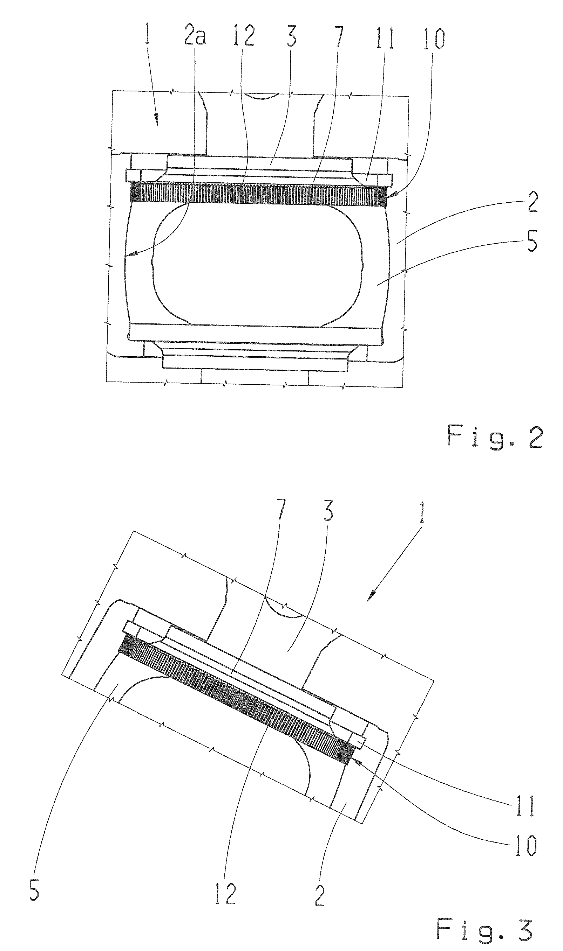

- Fig. 2: einen Längsschnitt des mittleren Bereichs der Gelenkeinrichtung nach Figur 1,
- Fig. 3: eine Detailansicht der an die elastisch verformbaren Lage anvulkanisierten Schale mit der nach außen weisenden Rändelung,

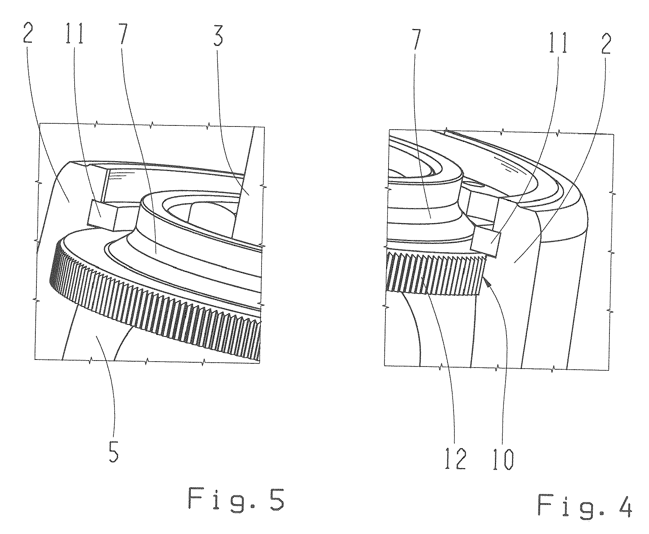

- Fig. 4: eine Detaildarstellung der Schale mit Rändelung unterhalb eines sie sichernden Verschlussrings,
- Fig. 5: eine ähnliche Darstellung wie Figur 4, jedoch von schräg "oben" gesehen, mit zwei Enden des den Gelenkkörper haltenden und axial vorspannenden Verschlussrings.

Ein mit einer oder mehreren erfindungsgemäßen Gelenkeinrichtungen 1 ausgerüstetes Kraftfahrzeug bildet häufig einen Nutzkraftwagen (NKW) aus und weist einen Fahrzeugrahmen auf. Ein solcher Fahrzeugrahmen kann typisch seitliche Längsträger und mehrere Querträger umfassen. An dem Fahrzeugrahmen sind über Lenker und zugehörige Gelenkeinrichtungen 1 beispielsweise Fahrwerkselemente halterbar. Der Lenker kann dabei integraler Bestandteil eines Gehäuses 2 der jeweiligen Gelenkeinrichtung 1 sein. Auch beispielsweise ein Baufahrzeug oder ein Offroadfahrzeug kann mit erfindungsgemäßen Gelenkeinrichtungen 1 versehen sein.

Eine solche Gelenkeinrichtung 1 umfasst einen axial erstreckten Gelenkzapfen 3, insbesondere eine sog. Pratze, der hier in seinem mittleren Bereich kugelförmig erweitert ist. An seinen axial äußeren Rändern 4 kann der Gelenkzapfen 3 mit Bohrungen 4a zur Aufnahme von Halterungsmitteln und zu seiner Festlegung an einem weiteren Bauteil versehen sein. Eine von der axialen Mitte ausgehende Symmetrie, wie hier dargestellt, ist nicht zwingend.

Die Gelenkeinrichtung 1 umfasst weiter eine den Gelenkzapfen 3 ganz oder teilweise radial umgebende elastisch verformbare und in sich massive, gummiartige Lage 5, die ohne axiale Vorspannung mit ihrer radialen Außenseite 6 eine beispielsweise rundzylindrische Form ausbildet. Die Dicke der Lage 5 variiert daher über den axialen Verlauf. Insgesamt ist sie hier manschettenartig um insbesondere den kugelförmig erweiterten Bereich des Zapfens 3 ausgebildet.

Durch axiale Vorspannung kann die Außenseite beispielsweise nach außen auswölben und damit eine Freidrehung 2a an der Innenseite des Gehäuses 2 ausfüllen. Die radiale Außenseite 6 steht zumindest bereichsweise in Kontakt zu dem Gehäuse 2. An zumindest einem axialen Ende ist die elastisch verformbare Lage 5 mit einem nach Art einer Schale wirkenden Ringkörper 7 hier fest verbunden, insbesondere an diesen anvulkanisiert. Darüber kann beispielsweise ein Verschlussring 11 in einer Nut gehalten sein und unter axialer Vorspannung den Ringkörper 7 und die elastisch verformbare Lage 5 sichern. Der Verschlussring 11 kann beispielsweise auch ein mehrlagiger Lamellenring sein.

Der Gelenkzapfen 3 bildet mit der elastisch verformbaren Lage 5 und dem zumindest einen schalenartigen Ringkörper 7 einen insgesamt relativ zum Gehäuse 3 beweglichen Gelenkkörper 8 aus. Um ein Durchrutschen dieses Gelenkkörpers 8 gegenüber dem Gehäuse 2 bereits bei einem zu kleinen Drehwinkel um die Achse 9 zu verhindern, wird hier eine Verdrehbarkeit des Gelenkkörpers 8 um seine Längsachse 9 über eine zusätzlich zur Anlage der Außenseite 6 der elastisch verformbaren Lage 5 an dem Gehäuse 2 vorgesehene Verdrehsicherung 10 gehemmt. Hemmung kann dabei heißen, dass die Verdrehung erschwert oder unterhalb einer Grenzkraft erschwert oder verhindert oder auch, dass die Verdrehung vollständig blockiert ist, während eine Druck- und Zug-Belastung über die elastische Lage 5 erhalten bleiben kann.

An dem axial gegenüberliegenden Ende kann die elastisch verformbare Lage 5 ebenfalls fest an einen weiteren Ringkörper 7a anvulkanisiert sein, der hinter einem Verschlussring gesichert ist. Alternativ kann auch das Gehäuse 2 hier becherartig ausgebildet sein, so dass ein zusätzlicher Verschlussring nicht erforderlich ist. Auch muss der zweite Ring 7a nicht fest mit der elastisch deformierbaren Lage 5 in Verbindung stehen. Insgesamt lässt die Erfindung verschiedene Möglichkeiten der Realisierung des zumindest den Gelenkzapfen 3, die elastische Lage 5 und den Ring 7 umfassenden Gelenkkörpers 8 und der Ausbildung der Verdrehsicherung 10 zwischen diesem und dem Gehäuse 2 zu.

Im hier gezeichneten Ausführungsbeispiel ist zur Ausbildung der Verdrehsicherung 10 an zumindest einer mit der elastischen Lage 5 verbundenen Schale 7 eine nach radial außen weisende Zahnprofilierung 12 nach Art einer Rändelung ausgebildet. Diese ist hier einstückig an der Schale 7 angeformt, was weitere mögliche Fehlerquellen und Schwächungen ausschließt. Die Zahnprofilierung 12 ist über die gesamte axiale Höhe der Schale 7 ausgebildet und zeigt so eine axiale Erstreckung von einigen Millimetern bis in den Zentimeterbereich. Über diese Zahnprofilierung 12 ist die Schale 7 - und mit ihr der gesamte Gelenkkörper 8 - in einer Presspassung im Gehäuse 2 gehalten und dadurch zumindest kraftschlüssig an dem Gehäuse 2 abgestützt. Zusätzlich kann die Zahnprofilierung 12 auch ein Stück weit formschlüssig in die radial nach innen weisende Wandung des Gehäuses 2 eingreifen. Der Anteil der Formschlüssigkeit kann je nach Materialpaarung und Einpressdruck variieren. Auch kann sich der formschlüssige Anteil im Lauf der Betriebsdauer erhöhen.

Dabei ist es grundsätzlich auch möglich, dass die Verdrehsicherung 10 vollständig formschlüssig zwischen dem Gelenkkörper 8 und dem Gehäuse 2 wirksam ist, etwa über radial ausgreifende Nasen des Gelenkkörpers 8, die in komplementäre Ausnehmungen des Gehäuses 2 eingreifen.

Im hier beschriebenen Ausführungsbeispiel ist die Verdrehsicherung 10 durch an der radialen Außenseite des Gelenkkörpers 8 vorgesehene Maßnahmen, nämlich hier der Rändelung 11 am Ring 7, sowie durch die Einpressung des Bauteils 7 ins Gehäuse 2 gebildet. Zusätzlich oder alternativ könnte auch an der radialen Innenseite des Gehäuses 2 eine Rändelung oder eine andere geeignete Maßnahme zur Sicherstellung einer Verdrehsicherung angeordnet sein.

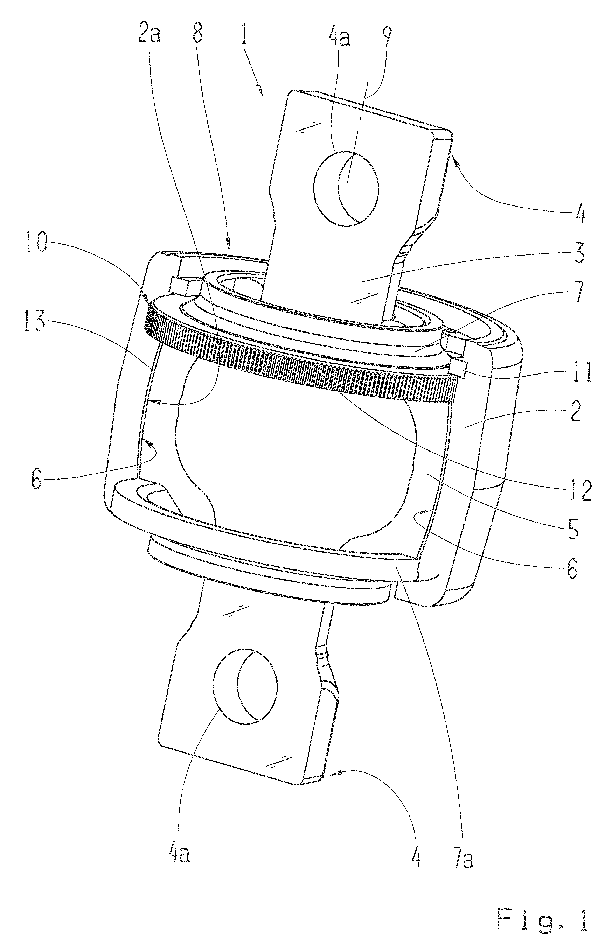

Ebenso ist es möglich, dass zumindest ein Teil der radial nach außen weisenden Fläche der elastischen Lage 5 als Verdrehsicherung mit dem Gehäuse 2 verklebt ist. Eine solche Klebefläche 13 ist in Figur 1 mit eingezeichnet. Diese Maßnahme kann auch zusätzlich zu einer Rändelung oder anderen Maßnahmen vorgesehen sein. Auch kann die Verklebung so erfolgen, dass sie nur bei niedrigen Drehwinkeln wirksam ist und ab einer Grenzbelastung abreißt.

Insgesamt können auch der Gelenkkörper und der Aufnahmeraum des Gehäuses eine von der Rotationssymmetrie abweichende Umrissgestalt, insbesondere eine ovale Umrissgestalt, als Verdrehsicherung ausbilden.

Die Verdrehsicherung muss nicht über radial wirksame Maßnahmen wie die Rändelung 12 erfolgen, sondern es können auch axial eingreifende Blockiermittel vorgesehen sein, beispielsweise Stifte oder ähnliches, die mit einer axialen Komponente in einen Verschlussring 11 und eine Schale 7 des Gelenkkörpers 8 eingreifen.

Es versteht sich, dass eine derartige Gelenkeinrichtung 1 an verschiedenen Stellen im Fahrzeug eingesetzt werden kann, insbesondere auch innerhalb von Lenkungen und Fahrwerksgelenken.

### Bezugszeichen

- 1: Gelenkeinrichtung,
- 2: Gehäuse,
- 2a: Freidrehung,
- 3: Gelenkzapfen,
- 4: dessen axiale Enden,
- 4a: Bohrungen,
- 5: elastisch verformbare Lage,
- 6: deren radiale Außenseite,
- 7: schalenartiger Ringkörper,
- 7a: axial gegenüber gelegener Ringkörper,
- 8: Gelenkkörper,
- 9: Längsachse,
- 10: Verdrehsicherung,
- 11: Verschlussring,
- 12: Zahnprofilierung,
- 13: Klebefläche

## Patentansprüche

1. Gelenkeinrichtung (1), umfassend einen axial erstreckten Gelenkzapfen (3), insbesondere eine sog. Pratze, und eine diesen ganz oder teilweise radial umgebende elastisch verformbare Lage (5), die an ihrer radialen Außenseite (6) zumindest bereichsweise in Kontakt zu einem Gehäuse (2) steht und die an zumindest einem axialen Ende mit einem Ringkörper (7) verbunden ist, insbesondere an diesen anvulkanisiert ist, wobei der Gelenkzapfen (3) mit der elastisch verformbaren Lage (5) und dem zumindest einen Ringkörper (7) einen relativ zum Gehäuse (2) beweglichen Gelenkkörper (8) bildet, wobei eine Verdrehbarkeit des Gelenkkörpers (8) um seine Längsachse (9) über eine zusätzlich zur Anlage der Außenseite (6) der elastisch verformbaren Lage an dem Gehäuse vorgesehene Verdrehsicherung (10) gehemmt ist, zu deren Ausbildung der Ringkörper (7) über eine Presspassung im Gehäuse (2) gehalten ist, wobei an dem Ringkörper (7) eine nach radial außen weisende Zahnprofilierung (12) nach Art einer Rändelung angeordnet ist, **dadurch gekennzeichnet, dass** die Zahnprofilierung (12) formschlüssig in die radial nach innen weisende Wandung des Gehäuses (2) eingreift, wobei ein Verschlussring (11) in einer im Gehäuse (2) vorgesehenen Nut gehalten ist und unter axialer Vorspannung den Ringkörper (7) und die elastisch verformbare Lage (5) sichert.

2. Gelenkeinrichtung (1) nach Anspruch 1, **dadurch gekennzeichnet, dass** der Ringkörper (7) über die Zahnprofilierung (12) zusätzlich kraftschlüssig an dem Gehäuse (2) abgestützt ist.

3. Gelenkeinrichtung (1) nach Anspruch 1 oder 2, **dadurch gekennzeichnet, dass** durch die axiale Vorspannung die elastische Lage (5) in Einbaustellung in eine radiale Freidrehung (2a) des Gehäuses (2) eingedrückt ist.

4. Gelenkeinrichtung (1) nach Anspruch 3, **dadurch gekennzeichnet, dass** durch die Freidrehung (2a) eine konkave Wandungslinie der radial nach innen weisenden Wandung des Gehäuses (2) gebildet ist.

5. Gelenkeinrichtung (1) nach einem der Ansprüche 1 bis 4, **dadurch gekennzeichnet, dass** als zusätzliche Verdrehsicherung (10) mit einer axialen Komponente in den Verschlussring (11) und den Ringkörper (7) des Gelenkkörpers eingreifende Blockiermittel, insbesondere Stifte, vorgesehen sind.

6. Gelenkeinrichtung (1) nach einem der Ansprüche 1 bis 5, **dadurch gekennzeichnet, dass** der Verschlussring (11) ein mehrlagiger Lamellenring ist.

7. Gelenkeinrichtung (1) nach einem der Ansprüche 1 bis 6, **dadurch gekennzeichnet, dass** die elastisch verformbare Lage (5) an den Ringkörper (7) anvulkanisiert ist.

8. Kraftfahrzeug mit zumindest einer Gelenkeinrichtung (1) nach einem der Ansprüche 1 bis 7.

## Claims

1. Joint device (1), comprising an axially extending pivot (3), in particular what is known as a claw, and an elastically deformable layer (5) which radially surrounds it completely or partially, is in contact with a housing (2) at least in regions on its radial outer side (6) and is connected at at least one axial end to an annular body (7), in particular is vulcanized onto the latter, the pivot (3) forming, together with the elastically deformable layer (5) and the at least one annular body (7), a joint body (8) which can be moved relative to the housing (2), a rotatability of the joint body (8) about its longitudinal axis (9) being inhibited via an anti-rotation safeguard (10) which is additionally provided for contact of the outer side (6) of the elastically deformable layer against the housing, for the configuration of which anti-rotational safeguard (10) the annular body (7) is held in the housing (2) via an interference fit, a radially outwardly pointing toothed profiling (12) in the manner of knurling being arranged on the annular body (7), **characterized in that** the toothed profiling (12) engages in a positively locking manner into the radially inwardly pointing wall of the housing (2), a closure ring (11) being held in a groove which is provided in the housing (2), and securing the annular body (7) and the elastically deformable layer (5) under axial prestress.

2. Joint device (1) according to Claim 1, **characterized in that** the annular body (7) is additionally supported on the housing (2) in a non-positive manner via the toothed profiling (12).

3. Joint device (1) according to Claim 1 or 2, **characterized in that** the elastic layer (5) is pressed into a radial turned recess (2a) of the housing (2) in the installed position by way of the axial prestress.

4. Joint device (1) according to Claim 3, **characterized in that** a concave wall line of the radially inwardly pointing wall of the housing (2) is formed by way of the turned recess (2a).

5. Joint device (1) according to one of Claims 1 to 4, **characterized in that** blocking means, in particular pins, which engage into the closure ring (11) and the annular body (7) of the joint body are provided as additional anti-rotation safeguard (10) with an axial component.

6. Joint device (1) according to one of Claims 1 to 5, **characterized in that** the closure ring (11) is a multiple-layer lamellar ring.

7. Joint device (1) according to one of Claims 1 to 6, **characterized in that** the elastically deformable layer (5) is vulcanized onto the annular body (7).

8. Motor vehicle having at least one joint device (1) according to one of Claims 1 to 7.

## Revendications

1. Système articulé (1), comprenant un tourillon d'articulation (3) s'étendant axialement, en particulier ce qu'on appelle une patte d'attache, et une couche (5) déformable élastiquement, entourant celle-ci radialement, complètement ou partiellement, qui, au niveau de son côté extérieur radial (6), est au moins en partie en contact avec un boîtier (2) et qui est connectée au niveau d'au moins une extrémité axiale avec un corps annulaire (7), en particulier qui est vulcanisée sur celui-ci, le tourillon d'articulation (3) formant avec la couche (5) déformable élastiquement et l'au moins un corps annulaire (7) un corps articulé (8) déplaçable par rapport au boîtier (2), une rotation du corps articulé (8) autour de son axe longitudinal (9) étant bloquée par le biais d'une fixation antirotation (10) prévue sur le boîtier en plus de l'appui du côté extérieur (6) de la couche déformable élastiquement, pour la réalisation de laquelle, le corps annulaire (7) est retenu dans le boîtier (2) par le biais d'un ajustement serré, un profilage denté (12) de type moletage, tourné radialement vers l'extérieur, étant disposé sur le corps annulaire (7), **caractérisé en ce que** le profilage denté (12) s'engage par engagement par correspondance de formes dans la paroi du boîtier (2) tournée radialement vers l'intérieur, une bague de fermeture (11) étant retenue dans une rainure prévue dans le boîtier (2) et fixant le corps annulaire (7) et la couche déformable élastiquement (5) avec une précontrainte axiale.

2. Système articulé (1) selon la revendication 1, **caractérisé en ce que** le corps annulaire (7) est en outre supporté par engagement par force par le biais du profilage denté (12) contre le boîtier (2).

3. Système articulé (1) selon la revendication 1 ou 2, **caractérisé en ce que** la couche élastique (5), est pressée par la précontrainte axiale dans la position d'installation dans un dégagement radial (2a) du boîtier (2).

4. Système articulé (1) selon la revendication 3, **caractérisé en ce qu'**une ligne de paroi concave de la paroi du boîtier (2) orientée radialement vers l'intérieur est formée par le dégagement (2a).

5. Système articulé (1) selon l'une quelconque des revendications 1 à 4, **caractérisé en ce que** l'on prévoit en tant que fixation antirotation supplémentaire (10) des moyens de blocage, en particulier des goupilles, avec une composante axiale, s'engageant dans la bague de fermeture (11) et le corps annulaire (7) du corps articulé.

6. Système articulé (1) selon l'une quelconque des revendications 1 à 5, **caractérisé en ce que** la bague de fermeture (11) est une bague à lamelles à plusieurs couches.

7. Système articulé (1) selon l'une quelconque des revendications 1 à 6, **caractérisé en ce que** la couche déformable élastiquement (5) est vulcanisée sur le corps annulaire (7).

8. Véhicule automobile comprenant au moins un système articulé (1) selon l'une quelconque des revendications 1 à 7.
